# EUROPEAN PATENT SPECIFICATION

(11) **EP 3 795 246 B1**
(45) Date of publication and mention of the grant of the patent: **26.11.2025**
(21) Application number: 19803702.0
(22) Date of filing: 17.05.2019
(51) Int. Cl.: B01J 29/76, B01D 53/94, B01J 37/02, F01N 3/035, F01N 3/08, F01N 3/28

(54) **DISCHARGE GAS PURIFICATION CATALYST**
ABGASREINIGUNGSKATALYSATOR
CATALYSEUR DE PURIFICATION DE GAZ DE DÉCHARGE

(30) Priority: 17.05.2018 JP 2018095467; 21.09.2018 JP 2018177792
(43) Date of publication of application: 24.03.2021
(73) Proprietor: Tokyo Roki Co., Ltd., Yokohama-shi Kanagawa 224-0041 (JP)
(72) Inventor: MORI, Takayuki, Yokohama-shi, Kanagawa 224-0041 (JP)
(74) Representative: Osha BWB
(86) International application number: PCT/JP2019/019648
(87) International publication number: WO 2019/221266

(56) References cited:
- WO-A1-2017/100384
- WO-A1-2017/134007
- WO-A1-2017/163984
- JP-A- 2005 152 774
- JP-A- 2010 501 326
- JP-A- 2014 198 654
- JP-A- 2015 112 559
- JP-A- 2017 519 627

## Description

### [Technical Field]

The present disclosure relates to an exhaust gas purification catalyst, and more particularly to an SCR-support DPF catalyst having high NOx purification capability.

### [Background Art]

Exhaust gas purification systems are used to treat exhaust gas discharged from automotive vehicles. In order to downsize the exhaust gas purification systems, development is in progress of an SCR-support DPF catalyst (hereinafter referred to as "SCR/DPF catalyst") capable of achieving both capability of collecting PM (particulate matters) contained in exhaust gas and NOx purification capability.

Selective catalytic reduction (SCR) catalyst is a catalyst with which NOx is reduced to N₂ and H₂O using urea or ammonia produced by hydrolysis of urea as a reducing agent. A diesel particulate filter (DPF) includes a diesel particulate collection filter for removing PM. Upon use, the DPF provided with the SCR catalyst (the SCR/DPF catalyst) is disposed, for example, at the bottom of an automotive vehicle.

Here, examples of the SCR catalyst include a zeolite-based SCR catalyst which is currently mainstream (see, for example, PTL 1).

### [Citation List]

### [Patent Literature]

PTL 1: Japanese Patent Application Publication No. 2012-52546; PTL 2: WO 2017/100384 discloses a process for the preparation of a zeolitic material having a CHA-type framework structure.

### [Summary of Invention]

### [Technical Problem]

However, a zeolite-based SCR catalyst has a low bulk specific gravity. Accordingly, if the DPF is provided with a large amount of zeolite-based SCR catalyst to improve NOx purification capability, the pores of the DPF become clogged. This obstructs the flow of exhaust gas, which may results in reduction in the NOx purification capability.

The present disclosure has been achieved in light of such circumstances, and is directed to providing an SCR/DPF catalyst capable of achieving both PM collection capability and NOx purification capability even with the use of a large amount of zeolite-based SCR catalyst.

An aspect of the present disclosure is an exhaust gas purification catalyst comprising a DPF substrate provided with a slurry, the slurry having a viscosity equal to or less than 20 mPa·s at 25°C, the slurry being prepared using a Cu-containing zeolite having a primary particle size equal to or less than 0.5 µm. Cu concentration is 5 wt%.

Further, 50% particle size of the zeolite measured by dynamic light scattering is from 1.7 µm to 2.0 µm.

Further, it is desirable that 90% particle size of the zeolite measured by dynamic light scattering is equal to or less than 2.5 µm.

Further, it is desirable that 50% particle size of the zeolite in the slurry is equal to or less than 2.0 µm.

### [Advantageous Effects of Invention]

According to the present disclosure, it is possible to provide an SCR/DPF catalyst capable of achieving both PM collection capability and NOx purification capability even with the use of a large amount of zeolite-based SCR catalyst.

### [Brief Description of Drawings]

Fig. 1 is a graph illustrating a relationship between each temperature and NOx purification rate in Embodiments 1 to 3 and Comparative examples 1 to 3 and 6.
Fig. 2 is a graph illustrating a relationship between each temperature and NOx purification rate in Comparative examples 4 and 5.

### [Description of Embodiments]

Hereinafter, embodiments of the present disclosure will be described, although the scope of the present disclosure is not limited to the present description including embodiments. Further, "%" shall represent "weight percent" unless otherwise specified.

### <Exhaust gas purification catalyst>

An SCR/DPF catalyst is a catalyst with which NOx is reduced to harmless N₂ and H₂O by SCR catalyst, as well as PM contained in the exhaust gas discharged from an engine of an automotive vehicle is collected using a DPF, and the SCR/DPF catalyst is a catalyst is usually provided at the bottom of the automotive vehicle.

Examples of a DPF substrate includes cordierite, SiC, alumina titanate, and the like, but are not limited thereto.

Examples of a structure used for the DPF includes a wall-flow structure. This structure includes a plurality of exhaust gas flow passages (honeycomb cells) extending in parallel with each other.

The exhaust gas flow passages include: exhaust gas inflow passages each having its downstream end blocked (sealed) by a plug; exhaust gas outflow passages each having its upstream end blocked (sealed) by a plug; and porous partition walls.

The exhaust gas inflow passages and the exhaust gas outflow passages are separated from each other by the partition walls.

Further, pores of the partition walls are provided with the SCR catalyst (including a form in which part of a plurality of pores is provided with the SCR catalyst and other pores are coated) . Note that the details of the SCR catalyst will be described later.

With the use of such an SCR/DPF catalyst, exhaust gas components entering from the exhaust gas inflow passages passes through the partition walls and moves to the exhaust gas outflow passages. At this time, solid PM are collected by the countless pores provided in the partition walls. In addition, NOx is purified by the SCR catalyst provided to the pores in the partition walls.

Such a catalyst having both PM collection capability and NOx purification capability as described above is referred to as the SCR/DPF catalyst. Note that the combination of this SCR/DPF catalyst and a known urea adding device can further enhance NOx purification capability.

### <SCR catalyst>

The SCR catalyst according to an embodiment of the present disclosure includes a Cu-containing zeolite having a primary particle size equal to or less than 0.5 µm. Note that when the zeolite is in a powdered state, primary particles may be present in a dispersed state, or the primary particles may be aggregated to form so-called secondary particles that are larger in size than the primary particles.

Various types of zeolite may be used, as long as they have NOx purification capability. Further, naturally produced zeolites may be used, or zeolites synthesized by a given method may be used.

Zeolite having a CHA structure is used as an example of a desirable zeolite. The zeolite having a CHA structure is an oxygen eight-membered ring zeolite having a three-dimensional pore structure, and which mainly has a composition of Ca₆²⁺[Si₂₄Al₁₂O₇₂].

Further, it is desirable that 50% particle size of the zeolite measured by dynamic light scattering is equal to or less than 2.0 µm, and further it is desirable that 90% particle size thereof measured by dynamic light scattering is equal to or less than 2.5 µm.

One obtained by slurrying the SCR catalyst is used when the SCR catalyst is provided to the DPF. Such slurry is prepared by dispersing zeolite in water. The slurry in an embodiment of the present disclosure satisfies a condition that the viscosity thereof is equal to or less than 20 mPa·s at 25°C.

Preparing the SCR/DPF catalyst by providing the DPF with the slurry that satisfies this condition can prevent occurrence of clogging in the DPF pores, even when the DPF substrate is provided with a large amount of slurry.

Further, it is desirable that 50% particle size of the slurry measured by dynamic light scattering is equal to or less than 2.0 µm.

### Embodiments

Next, embodiments according to the present disclosure will be described, however, the scope of the present disclosure is not limited to these embodiments.

### <Embodiments 1 to 3, and Comparative examples 1 to 3 and 6>

CHA-structured zeolite having a primary particle size equal to or less than 0.5 µm or CHA-structured zeolite having a primary particle size of 2 µm was dispersed in ion exchanged water to prepare slurries as SCR catalysts according to Embodiments 1 to 3 and Comparative examples 1 to 3 and 6. Table 1 clearly indicates the details as to which zeolite was used in each of the embodiments and the comparative examples (the same applies to Comparative examples 4 and 5) .

An SiC-DPF (porosity 58%, cell thickness 11 mils, and cell density 350 cpi) manufactured by IBIDEN Co., Ltd. was provided with the prepared slurries, dried, and then fired at 450°C or higher. One obtained by hollowing out the fired body, forming the body into a size of φ25 mm × 50 mm, and then performing alternately sealing in both end surfaces thereof, was used as the SCR/DPF catalyst.

### <Comparative examples 4 and 5>

The zeolites given in Table 1 were dispersed in ion exchanged water to prepare slurries. A cordierite flow-through honeycomb substrate (cell thickness 5 mils and cell density 300 cpi) manufactured by NGK Insulators, Ltd. was provided with the prepared slurries, dried, and then fired at 450°C or higher. One obtained by hollowing out the fired body to be formed into a size of φ25 mm × 50 mm, was used as SCR catalyst.

Note that the flow-through honeycomb substrates used in Comparative examples 4 and 5 have neither pores in the partition walls nor sealed portions at the two ends of the substrate, and thus are not so configured as to collect PM. That is, they are different from the DPF substrates used in Embodiment 1 and the like.

Meanwhile, only the surfaces of the substrate are provided with a catalyst material, and a reaction gas reacts in response to contact with the catalyst while passing through flow channels. Accordingly, unlike the DPF, the flow-through honeycomb substrates are not affected by clogging in the pores of the substrates. Thus, the NOx purification capability by the flow-through honeycomb substrates is considered to relatively well reflect the performance of the zeolite itself.

Table 1 gives the details of the zeolites according to the foregoing Embodiments 1 to 3 and Comparative examples 1 to 6, with respect to primary particle size, particle size measured by dynamic light scattering, and Cu concentration, and the details of the slurries prepared using the zeolites, with respect to particle size measured by dynamic light scattering, viscosity, and the amount of SCR catalyst provided to the DPF substrate (or the flow-through honeycomb substrate).

Note that the primary particle size was measured in the following manner.
(1) Zeolite powder was imaged at a magnification of 10,000 using an FE-SEM device.
(2) In this image, at least 20 or more of the smallest unit crystals having a cubic shape that is unique to a CHA structure were measured in size (Feret diameter) using image analysis software, and the mean diameter thereof was obtained. Note that in cases where the particles were in an aggregated state, the diagonal length of a face exposed on the surface was measured and the resulting measurement value was also used.

The dynamic light scattering particle size (D50, D90) was measured using an MT3300EX (Microtrac Bell Co., Ltd.). In addition, the slurry viscosity was measured using a cylindrical rotary viscometer VT-03F (RION Co., Ltd.).

**[Table 1]**

| | Zeolite material used | | | | Slurry at time of processing | | | Catalyst adhesion amount (g/L) | Processed substrate |
|---|---|---|---|---|---|---|---|---|---|
| | Primary particle size (µm) | Particle size measured by dynamic light scattering (D₅₀µm) | Particle size measured by dynamic light scattering (D₉₀µm) | Cu concentration (wt%) | Particle size measured by dynamic light scattering (D₅₀µm) | Particle size measured by dynamic light scattering (D₉₀µm) | Viscosity (mPa·s at 25°C) | | |
| Embodiment 1 | ≦ 0.5 | 1.7 | 2.4 | 5.0 | 1.6 | 2.4 | 5 | 93 | DPF |
| Embodiment 2 | ≦ 0.5 | 1.7 | 2.4 | 5.0 | 1.6 | 2.4 | 10 | 125 | |
| Embodiment 3 | ≦ 0.5 | 1.7 | 2.4 | 5.0 | 1.6 | 2.4 | 16 | 154 | |
| Comparative Example 1 | 2.0 | 6.1 | 11.0 | 2.5 | 3.5 | 4.9 | 80 | 97 | |
| Comparative Example 2 | ≦ 0.5 | 1.7 | 2.4 | 5.0 | 1.8 | 2.6 | 24 | 98 | |
| Comparative Example 3 | ≦ 0.5 | 1.7 | 2.4 | 5.0 | 1.8 | 2.6 | 105 | 133 | |
| Comparative Example 4 | 2.0 | 6.1 | 11.0 | 2.5 | 3.5 | 4.9 | 140 | 150 | Flow-through |
| Comparative Example 5 | ≦ 0.5 | 1.7 | 2.4 | 5.0 | 1.8 | 2.6 | 190 | 150 | |
| Comparative Example 6 | 2.0 | 6.1 | 11.0 | 2.5 | 3.5 | 4.8 | 10 | 100 | DPF |

The SRC/DPF catalysts prepared in Embodiments 1 to 3 and Comparative examples 1 to 6 were used to measure purification capability with respect to NOx contained in a simulated gas simulating exhaust gas.

### Method of measuring NOx purification capability

The composition of the simulated gas simulating exhaust gas is as follows.

### NO: 500 ppm, NH₃: 50 ppm, H₂: 5%, N₂: other

The foregoing simulated gas was passed through the SCR/DPF catalyst at a flow velocity (SV) of 60000/h, and the temperature was raised at 30°C/min. At each increase in temperature of 10°C from 100°C, the amount of NOx was measured before passing the gas through the SCR/DPF catalyst and after passing the gas therethrough. (1- (NOx amount after passing therethrough) ÷ (NOx amount before passing therethrough)) × 100 was used to define the NOx purification rate at each temperature.

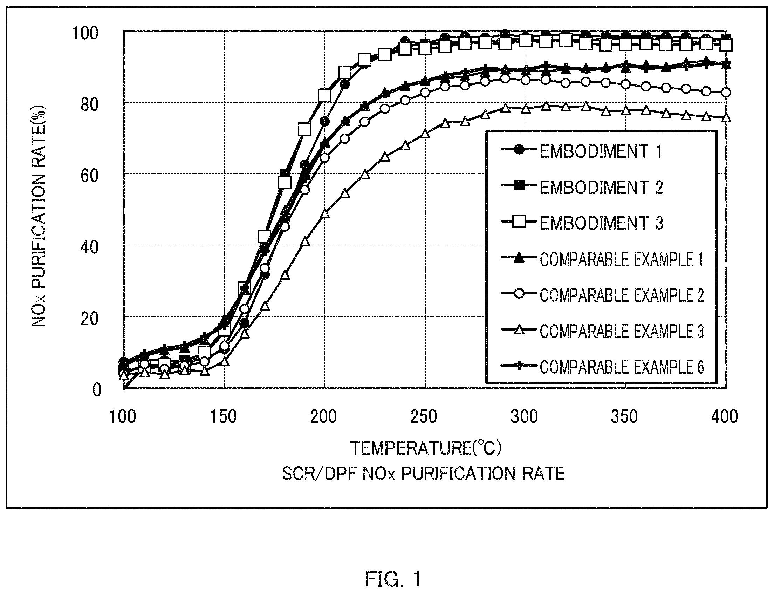

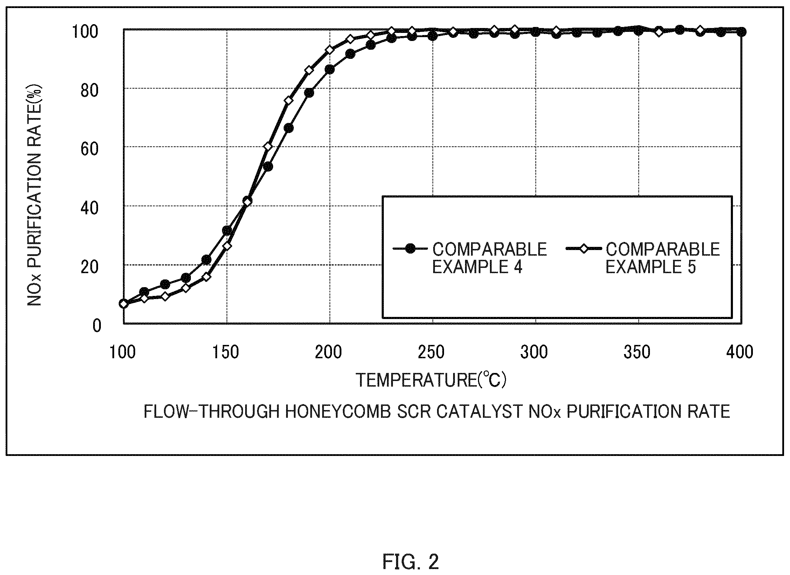

Fig. 1 is a graph illustrating the NOx purification rates of the catalysts in Embodiments 1 to 3 and Comparative examples 1 to 3 and 6, calculated as such. Fig. 2 is a graph illustrating the NOx purification rates in Comparative examples 4 and 5, calculated as such. Specifically, the horizontal axis represents the temperature of the simulated gas, and the vertical axis represents the NOx purification rate.

Additionally, Table 2 gives the NOx purification rates of the catalysts in Embodiments 1 to 3 and Comparative examples 1 to 6.

**[Table 2]**

| | NOx purification rate at 300°C (%) |
|---|---|
| Embodiment 1 | 98 |
| Embodiment 2 | 98 |
| Embodiment 3 | 97 |
| Comparative Example 1 | 89 |
| Comparative Example 2 | 86 |
| Comparative Example 3 | 78 |
| Comparative Example 4 | 99 |
| Comparative Example 5 | 100 |
| Comparative Example 6 | 89 |

As is apparent from the experimental results, it has been confirmed that the SCR/DPF catalyst according to Embodiment 1 has higher NOx purification capability in a temperature range of 200°C to 400°C than the SCR/DPF catalysts according to Comparative example 1, 2, and 6: Comparative example 1, where the slurry providing amount per unit volume of the DPF substrate is substantially the same, the primary particle size of the zeolite greatly exceeds 0.5 µm, the 50% particle size measured by dynamic light scattering greatly exceeds 2.0 µm, the 90% particle size measured by dynamic light scattering greatly exceeds 2.5 µm, and the viscosity of the slurry at 25°C also exceeds 20 mPa·s; Comparative example 2, where the primary particle size of the zeolite is equal to or less than 0.5 µm, the 50% particle size measured by dynamic light scattering is equal to or less than 2.0 µm, and the 90% particle size measured by dynamic light scattering is equal to or less than 2.5 µm, however, the viscosity of the slurry at 25°C exceeds 20 mPa ·s; and Comparative example 6, where the primary particle size of the zeolite, the 50% particle size measured by dynamic light scattering, and the 90% particle size measured by dynamic light scattering exceed the foregoing specified values, as in Comparative example 1, however, the viscosity of the slurry at 25°C is equal to or less than 20 mPa ·s.

In addition, it has been confirmed from a comparison between Embodiments 2 and 3 and Comparative example 3 that the SCR/DPF catalysts according to Embodiments 2 and 3 have higher NOx purification capability in the temperature range of 200°C to 400°C than the SCR/DPF catalyst according to Comparative example 3, where the viscosity of the slurry at 25°C exceeds 20 mPa·s.

In addition, as is apparent from a comparison between Embodiment 1 and Embodiments 2 and 3, it has been confirmed that there is substantially no reduction in NOx purification capability even when the slurry providing amount exceeds 100 g/L, in other words, even with the use of a large amount of zeolite-based SCR catalyst.

From an evaluation of Comparative examples 4 and 5 using the flow-through honeycomb substrate, it is understood that there is no large difference in performance of zeolite itself between two types, i.e., the zeolite having a primary particle size equal to or less than 0.5 µm, and the zeolite having a primary particle size of 2 µm. Especially, they are substantially the same in performance in a temperature range of approximately 250°C or higher.

The reason why there are differences in NOx purification capability between Embodiments 1 to 3 and Comparative examples 1 to 3 and 6, although the NOx purification capabilities are substantially the same as with the flow-through honeycomb substrate, is considered to be unique to the DPF.

Note that, as mentioned above, the SCR/DPF catalyst according to an embodiment of the present disclosure may be used in combination with urea-SCR. In this case, since urea exhibits purification capability at 200°C or higher, performance in that temperature range is important. From such a point of view, the results in Embodiments 1 to 3 indicate that the SCR/DPF catalyst can sufficiently exert purification performance even at 200°C or higher. That is, it is understood that the purification capability can be maintained even when the SCR/DPF catalyst is used in combination with urea-SCR.

## Claims

1. An exhaust gas purification catalyst comprising:
a DPF substrate provided with a slurry, the slurry having a viscosity equal to or less than 20 mPa·s at 25°C, the slurry being prepared using a Cu-containing zeolite having a primary particle size equal to or less than 0.5 µm,
wherein Cu concentration is 5 wt%, and
wherein 50% particle size of the zeolite measured by dynamic light scattering is from 1.7 µm to 2.0 µm.

2. The exhaust gas purification catalyst according to claim 1, wherein
90% particle size of the zeolite measured by dynamic light scattering is equal to or less than 2.5 µm.

3. The exhaust gas purification catalyst according to claim 1 or claim 2, wherein
50% particle size of the zeolite in the slurry is equal to or less than 2.0 µm.

## Patentansprüche

1. Abgasreinigungskatalysator, umfassend:
ein DPF-Substrat, das mit einer Aufschlämmung versehen ist, wobei die Aufschlämmung eine Viskosität gleich oder kleiner als 20 MPa · s bei 25 °C aufweist, wobei die Aufschlämmung unter Verwendung eines Cu-haltigen Zeoliths mit einer Primärteilchengröße gleich oder kleiner als 0,5 µm hergestellt wird,
wobei die Cu-Konzentration 5 Gew.-% beträgt und
wobei die durch dynamische Lichtstreuung gemessene 50-%-Teilchengröße des Zeoliths 1,7 µm bis 2,0 µm beträgt.

2. Abgasreinigungskatalysator nach Anspruch 1, wobei
die durch dynamische Lichtstreuung gemessene 90-%-Teilchengröße des Zeoliths gleich oder kleiner als 2,5 µm ist.

3. Abgasreinigungskatalysator nach Anspruch 1 oder Anspruch 2, wobei
die 50-%-Teilchengröße des Zeoliths in der Aufschlämmung gleich oder kleiner als 2,0 µm ist.

## Revendications

1. Catalyseur de purification des gaz d'échappement comprenant :
un substrat DPF pourvu d'une suspension, la suspension ayant une viscosité inférieure ou égale à 20 mPa.s à 25°C, la suspension étant préparée en utilisant une zéolithe contenant du Cu ayant une taille de particule primaire inférieure ou égale à 0,5 µm,
dans lequel la concentration de Cu est de 5 % en poids, et
dans lequel la taille médiane des particules de la zéolithe, mesurée par diffusion dynamique de la lumière, est comprise entre 1,7 µm et 2,0 µm.

2. Catalyseur de purification des gaz d'échappement selon la revendication 1, dans lequel
la taille à 90 % des particules de la zéolithe mesurée par diffusion dynamique de la lumière est inférieure ou égale à 2,5 µm.

3. Catalyseur de purification des gaz d'échappement selon la revendication 1 ou 2, dans lequel
la taille médiane des particules de zéolithe dans la suspension est inférieure ou égale à 2,0 µm.
